# EUROPÄISCHE PATENTANMELDUNG

(11) **EP 0 872 524 A1**
(43) Veröffentlichungstag der Anmeldung: **21.10.1998**
(21) Anmeldenummer: 98100914.5
(22) Anmeldetag: 20.01.1998
(51) Int. Cl.: C09D 1/12

(54) **Verfahren zum Herstellen einer Kasein-Kalkfarbe**

(30) Priorität: 15.04.1997 DE 19715675
(71) Anmelder: Ruf, Klaus, 91207 Lauf-Neunhof (DE)
(72) Erfinder: Ruf, Klaus, 91207 Lauf-Neunhof (DE)
(74) Vertreter: Grünecker, Kinkeldey, Stockmair & Schwanhäusser Anwaltssozietät

(57) **Zusammenfassung**

Es wird ein Verfahren zum Herstellen einer Kasein-Kalkfarbe beschrieben, die eine erhöhte Haltbarkeit aufweist. Zu diesem Zweck wird der Kalk mit Wasser gelöscht und das Kasein sowie andere Zuschlagstoffe nach Abschluß des Löschvorgangs dem noch löschwarmen Kalkbrei zugegeben.

## Beschreibung

Die Erfindung bezieht sich auf ein Verfahren zum Herstellen einer Kasein-Kalkfarbe.

Kalkfarben mit Kaseinzusatz können für den innen- und Außenbereich, an Neu- und Altbauten sowie für verschiedene Untergründe, wie beispielsweise Kalk, Lehm und Kalkzementmörtel sowie auf Mauerwerk, auf Natur- und Ziegelstein, eingesetzt. Bei vielen dieser Anwendungsbeispiele ist die gegenwärtig praktizierte Verwendung von alkydharzhaltigen Anstrichstoffen nicht möglich, da diese den Untergrund zu stark versiegeln. Bei einer mit Kasein vermischten Kalkfarbe besteht jedoch das Problem, daß diese durch den Kaseingehalt (Milcheiweiß) sehr schnell verdirbt und nicht mehr brauchbar ist.

Der Erfindung liegt die Aufgabe zugrunde, eine Kasein-Kalkfarbe bereitzustellen, die eine erhöhte Haltbarkeit aufweist.

Die Aufgabe wird durch die im Anspruch 1 angegebene Erfindung gelöst.

Durch die Maßnahme, die Zusatzstoffe zur Farbe sofort nach Abschluß des Löschvorganges (Abschluß des "Kochens") des Kalks im Wasser zum heißen Kalkbrei zu geben, hat sich überraschenderweise herausgestellt, daß dadurch die Haltbarkeit der Farbe stark erhöht werden kann und gleichzeitig ein guter Aufschluß der Pigmente erreicht wird. Die Haltbarkeit liegt nunmehr bei mindestens sechs Monate (verglichen mit der Haltbarkeit von wenigen Tagen bzw gar Stunden herkömmlich gemischter Kaseinfarben).

Der Kasein-Kalkfarbe wird nach Anspruch 2 zweckmäßigerweise Öl zugesetzt, wobei der Ölzusatz gemäß Anspruch 3, unmittelbar nach dem Löschen erfolgt, um eine gute Konsistenz zu erreichen und das nachfolgende Einmischen der anderen Zutaten zu erleichtern.

Um das Einmischen zu verbessern, wird das Kasein nach Anspruch 5 warm, bzw. mit den in den Ansprüchen 6 und 7 angegebenen Stoffen aufgeschlossen, wobei die längste Haltbarkeit erreicht wird, wenn Borax zum Aufschluß des Kasein verwendet wird. Wenn geringfügige Abstriche im Hinblick auf die Haltbarkeit in Kauf genommen werden können, so kann auch Ammoniumhydrogencarbonat oder Salmiakgeist zum Aufschluß des Kasein verwendet werden

Anspruch 8 beschreibt die Verwendung eines besonders bevorzugten Kalks.

Durch die Zugabe von Glucose gemäß Anspruch 9 wird eine höhere Festigkeit und Wetterbeständigkeit der Farbe erreicht, da sich die Glucose mit dem Kalzium zu schwerlöslichem Trikalziumsaccharat verbindet.

Die Ansprüche 10 bis 12 beschreiben weitere, vorteilhafte Zuschlagstoffe, die alle dem Kalkbrei in löschwarmem Zustand zugefügt werden.

Die Ansprüche 13 und 14 beschreiben vorteilhafte Rezepturen für eine erfindungsgemäß hergestellte Kasein-Kalkfarbe.

Die Erfindung wird nachfolgend anhand eines Ausführungsbeispieles näher beschrieben.

Zum Herstellen der erfindungsgemäßen Farbe wird zunächst Luftkalk in Form von Weißfeinkalk in Wasser gelöscht. Man wartet, bis der Löschvorgang, d.h. das "Kochen", abgeschlossen ist. Anschließend wird in den noch löschwarmen (ca. 90°C) Kalkbrei Öl eingerührt, wobei bevorzugt kaltgepreßtes Sonnenblumenöl, jedoch auch Nußöl, Standöl oder Leinöl verwendet werden kann. Die Mischung wird bis zum Sämigwerden gerührt. Anschließend werden die trocken mischbaren Zuschlagstoffe, d.h. Marmormehl, Körnung 2 Gu, Talkum, Harnstoffharze, beispielsweise das unter dem Handelsnamen "Tillman Fließmittel OFT-III (FM) Pulver-F" verwendete Harnstoffharz, und Glucose trocken gemischt und dann zusammen mit Wasser dem löschwarmen, bereits mit Öl vermischten Kalkbrei zugegeben. Das Kasein, z.B. Kasein edible, 30/60 mesh (handelsüblich) wird mit Borax in etwa 40°C heißem Wasser aufgeschlossen und nach dem Aufschluß in den noch warmen Kalkteig eingemischt, bis eine Verdickung stattfindet.

Statt Marmormehl können Brechsteinmehle, Glasmehle oder Quarzmehl eingesetzt werden. Das Talkum kann durch Zinnstearat, Paraffine oder Natriumoleat ersetzt werden. Statt Harnstoffharze kann Flugasche, Kunstharzacryle, MICYO u. NANO-Silca (aus der Silizium-Karbid-Herstellung) oder Verflüssiger (aus der Putz- und Betonherstellung) verwendet werden. Statt reiner Glucose kann Melasse, Fruchtzucker jeder Art, Rohrzucker oder Honig eingesetzt werden. Statt mit Borax kann das Kasein auch mit Ammoniumhydrogencarbonat, Pottasche, Natron, Salmiakgeist oder Soda aufgeschlossen werden. Anstelle des aufbereiteten Kaseins kann Magerquark oder andere geeignete Milchprodukte direkt eingesetzt werden.

Die dadurch gebildete Farbe ist bis zu sechs Monate haltbar.

Die erfindungsgemäß hergestellte Kasein-Kalkfarbe hat die folgende Zusammensetzung:

| | | |
|---|---|---|
| Weißfeinkalk | 600 - 800 g oder | 14 - 19 Gew.-% |
| Wasserzugabe zum Löschen | 1200 -1600 g oder | 28 - 37 Gew.-% |
| Oel (Sonnenblumenöl) | 10 - 26 g oder | 0,2 - 0,6 Gew.-% |
| Marmormehl | 325 - 550 g oder | 7,6 - 13 Gew.-% |
| Talkum | 24 - 65 g oder | 0,5 - 1,5 Gew.-% |
| Harnstoffharze | 1 - 4 g oder | 0,02 - 0,09 Gew.-% |
| Glucose | 1 - 3,5 g oder | 0,02 - 0,08 Gew.-% |
| Wasserzugabe | 620 - 850 g oder | 14 - 20 Gew.-% |
| Borax | 42 - 75 g oder | 0,9 - 1,8 Gew.-% |
| Kasein | 15 - 50 g oder | 0,3 - 1,2 Gew.-% |
| Wasserzugabe | 600 - 810 g oder | 14 - 19 Gew.-% |

Bevorzugt setzt sich die erfindungsgemäß hergestellte Kasein-Kalkfarbe wie folgt zusammen:

| **Bestandteile** | **Gramm** | **Gew.%** |
|---|---|---|
| Weißfeinkalk | etwa 700 g oder | etwa 16,5 Gew.-% |
| Wasserzugabe z. Löschen | etwa 1500 g oder | etwa 35 Gew.-% |
| Sonnenblumenöl, kaltgepr. | etwa 15 g oder | etwa 0,35 Gew.-% |
| Marmormehl,Körnung 2 Gu | etwa 400 g oder | etwa 9,5 Gew.-% |
| Talkum | etwa 50 g oder | etwa 1,2 Gew.-% |
| Harnstoffharze (Tillman) | etwa 2,5 g oder | etwa 0,06 Gew.-% |
| Glucose | etwa 2,5 g oder | etwa 0,06 Gew.-% |
| Wasserzugabe | etwa 750 g oder | etwa 17,6 Gew.-% |
| Borax | etwa 60 g oder | etwa 1,5 Gew.-% |
| Kasein, edible, 30/60 mesh | etwa 25 g oder | etwa 0,6 Gew.-% |
| Wasserzugabe | etwa 750 g oder | etwa 17,6 Gew.-% |

Die erfindungsgemäß hergestellte Kasein-Luftkalkfarbe eignet sich besonders für solche Untergründe, die noch reagieren, beispielsweise für Kalkputz, der noch abbinden muß, sowie für alle Untergründe, bei denen eine stärkere Sperrwirkung, wie sie von Kunstharzfarben ausgeht, unerwünscht ist. Der Gehalt an Glucose gibt der Farbe eine höhere Festigkeit und Wetterbeständigkeit.

## Patentansprüche

1. Verfahren zum Herstellen einer Kasein-Kalkfarbe, wobei der Kalk mit Wasser gelöscht und das Kasein sowie andere Zuschlagstoffe nach Abschluß des Löschvorgangs dem löschwarmen Kalkbrei zugegeben werden.

2. Verfahren nach Anspruch 1, **dadurch gekennzeichnet**, daß dem löschwarmen Kalkbrei zuerst Öl, insbesondere kaltgepreßtes Sonnenblumenöl oder Nußöl oder Standöl oder Leinöl, unter Rühren bis zum Sämigwerden zugemischt wird.

3. Verfahren nach Anspruch 2, **dadurch gekennzeichnet**, daß nach dem Öl die trocken mischbaren Zuschlagstoffe zugegeben werden.

4. Verfahren nach Anspruch 3. **dadurch gekennzeichnet**, daß das Kasein aufgeschlossen und nach den trocken mischbaren Zuschlagstoffen zugegeben wird.

5. Verfahren nach einem der Ansprüche 1 bis 4, **dadurch gekennzeichnet**, daß das Kasein warm aufgeschlossen wird.

6. Verfahren nach einem der Ansprüche 1 bis 5, **dadurch gekennzeichnet**, daß das Kasein durch Borax aufgeschlossen wird.

7. Verfahren nach einem der Ansprüche 1 bis 5, **dadurch gekennzeichnet**, daß das Kasein durch Ammoniumhydrogencarbonat oder Salmiakgeist aufgeschlossen wird.

8. Verfahren nach einem der Ansprüche 1 bis 7, **dadurch gekennzeichnet**, daß Luftkalk in Form von Weißfeinkalk verwendet wird.

9. Verfahren nach einem der Ansprüche 1 bis 8, **dadurch gekennzeichnet**, daß dem löschwarmen Kalkbrei Glucose zugemischt wird.

10. Verfahren nach einem der Ansprüche 1 bis 9, **dadurch gekennzeichnet**, daß dem löschwarmen Kalkbrei Marmormehl zugemischt wird.

11. Verfahren nach einem der Ansprüche 1 bis 10, **dadurch gekennzeichnet**, daß dem löschwarmen Kalkbrei Talkum zugemischt wird.

12. Verfahren nach einem der Ansprüche 1 bis 11, **dadurch gekennzeichnet**, daß dem löschwarmen Kalkbrei Harnstoffharze zugemischt werden.

13. Verfahren nach einem der Ansprüche 1 bis 9, **dadurch gekennzeichnet**, daß 600 - 800 g oder 14 - 19 Gew.-% Weißfeinkalk in 1200 - 1600 g oder 28 - 37 Gew.-% Wasser gelöscht werden, daß nach dem Abschluß des Löschvorgangs 10 - 26 g oder 0,2 - 0,6 Gew.-% Öl, insbesondere kaltgepreßtes Sonnenblumenöl, bis zum Sämigwerden untergerührt wird, daß eine Trockenmischung aus 325 - 550 g oder 7,6 - 13 Gew.-% Marmormehl, 24 - 65 g oder 0,5 - 1,5 Gew.-% Talkum, 1 - 4 g oder etwa 0,02 - 0,09 Gew.-% Harnstoffharze und 1 - 3,5 oder 0,02 - 0,08 Gew.-% Glucose hergestellt und mit 620 - 850 g oder 14 - 20 Gew.-% Wasser dem gelöschten, warmen Kalkbrei zugegeben wird, und daß 42 - 75 g oder 0,9 - 1,8 Gew.-% Borax und 15 - 50 g oder 0,3 - 1,2 Gew.-% Kasein in 600-810 g oder 14-19 Gew.-% etwa 40°C warmen Wasser aufgeschlossen und dem warmen Kalkbrei untergemischt werden, bis eine Verdickung stattfindet.

14. Verfahren nach einem der Ansprüche 1 bis 12, **dadurch gekennzeichnet**, daß etwa 700 g oder etwa 16,5 Gew.-% Weißfeinkalk in etwa 1500 g oder etwa 35 Gew.-% Wasser gelöscht werden, daß nach dem Abschluß des Löschvorgangs etwa 15 g oder etwa 0,35 Gew.-% Öl, insbesondere kaltgepreßtes Sonnenblumenöl, bis zum Sämigwerden untergerührt wird, daß eine Trockenmischung aus etwa 400 g oder etwa 9,5 Gew.-% Marmormehl, etwa 50 g oder etwa 1,2 Gew.-% Talkum, etwa 2,5 g oder etwa 0,06 Gew.-% Harnstoffharze und etwa 2,5 g oder etwa 0,06 Gew.-% Glucose hergestellt und mit etwa 750 g oder etwa 17,6 Gew.-% Wasser dem gelöschten, warmen Kalbrei zugegeben wird, und daß etwa 60 g oder etwa 1,5 Gew.-% Borax und etwa 25 g oder etwa 0,6 Gew.-% Kasein in etwa 750 g oder etwa 17,6 Gew.-% etwa 40°C warmen Wasser aufgeschlossen und dem warmen Kalkbrei untergemischt werden, bis eine Verdickung stattfindet.
